# EUROPEAN PATENT APPLICATION

(11) **EP 1 643 161 A2**
(43) Date of publication of application: **05.04.2006**
(21) Application number: 05019472.9
(22) Date of filing: 07.09.2005
(51) Int. Cl.: F16H 57/04

(54) **Layout of oil pump for automatic transmission**

(30) Priority: 29.09.2004 JP 2004283664
(71) Applicant: JATCO Ltd, Fuji-shi, Shizuoka 417-8585 (JP)
(72) Inventor: Sugano, Taku, Fuji-shi, Shizuoka 417-8585 (JP); Saitou, Tsutomu, Fuji-shi, Shizuoka 417-8585 (JP)
(74) Representative: Grünecker, Kinkeldey, Stockmair & Schwanhäusser Anwaltssozietät

(57) **Abstract**

A belt-type CVT includes a primary pulley (410), a vane pump (700), a differential gear (600), an oil pan (740), and a housing (100) for accommodating the primary pulley (410), vane pump (700), differential gear (600), and oil pan (740), wherein the primary pulley (410), vane pump (700), and differential gear (600) having axes located in different positions. The vane pump (700) is disposed closer to the oil pan (740) than a first occupation circle (411) of the primary pulley (410) and a third occupation circle (601) of the differential gear (600) and below a common tangent line of the first occupation circle (411) and a second occupation circle (702) of the vane pump (700) and a common tangent line of the third occupation circle (601) and the second occupation circle (702), wherein the oil pump (700) is immersed in working oil within the oil pan (740).

## Description

### BACKGROUND OF THE INVENTION

The present invention relates to a layout of an oil pump for an automatic transmission, and more particularly, to a layout of a vane pump for a belt-type continuously variable transmission (CVT).

Japanese document P2004-92865A discloses a typical layout of an oil pump for an automatic transmission. In this document, the automatic transmission includes a belt-type CVT, wherein the oil pump is arranged in an oil pan.

### SUMMARY OF THE INVENTION

With the typical oil-pan layout disclosed in Japanese document 2004-92865A, however, when the engine is stopped on an uphill road or a downhill road to park the vehicle during a long time period, the oil pump can be exposed at the oil surface in accordance with variation in oil level within the oil pan. If the oil pump is of the vane type, vanes are brought into contact with the inner-peripheral surface of a hydraulic chamber by a centrifugal force of oil to achieve liquid-tightness, securing the pump performance. Then, if oil within the oil pump is drained, an appropriate vane pressing force cannot be secured, leading to difficult achievement of the stable initial discharge-pressure characteristic at engine start.

It is, therefore, an object of the present invention to provide a layout of an oil pump for an automatic transmission, which allows achievement of the stable initial discharge-pressure characteristic of the oil pump even if the oil pump is of the vane type and applied to a belt-type CVT.

Generally, the present invention provides a belt-type continuously variable transmission (CVT), which comprises: an input-side transmission element, the input-side transmission element having a first occupation circle; an oil pump, the oil pump having a second occupation circle; a differential gear, the differential gear having a third occupation circle; an oil pan; and a housing which accommodate the input-side transmission element, the oil pump, the differential gear, and the oil pan, the input-side transmission element, oil pump, and differential gear having axes located in different positions, wherein the oil pump is disposed closer to the oil pan than the first occupation circle and the third occupation circle and below a common tangent line of the first occupation circle and the second occupation circle and a common tangent line of the third occupation circle and the second occupation circle, wherein the oil pump is immersed in working oil within the oil pan.

### BRIEF DESCIPTION OF THE DRAWINGS

The other objects and features of the present invention will become apparent from the following description with reference to the accompanying drawings, wherein:

Fig. 1 is a schematic sectional view showing an automatic transmission to which the present invention is applied;

Fig. 2 is a schematic view showing a transmission casing seen from the side of a cover casing;

Fig. 3 is a schematic view showing the transmission casing seen from the side of a torque-converter casing;

Fig. 4 is a diagrammatic view for explaining the range of arrangement of a vane pump;

Fig. 5 is a fragmentary enlarged view of the vane pump and its surroundings; and

Fig. 6 is a schematic view showing the oil level within the transmission casing when the vehicle inclines in the longitudinal direction.

### DETAILED DESCRIPTION OF THE INVENTION

Referring to the drawings, the best mode for carrying out the present invention will be described. It is noted that the drawings referred to in connection with the following description of an embodiment show schematic structure of the present invention for clarifying the idea thereof, and not accurate structure of the present invention.

First, the structure of the automatic transmission in the embodiment will be described.

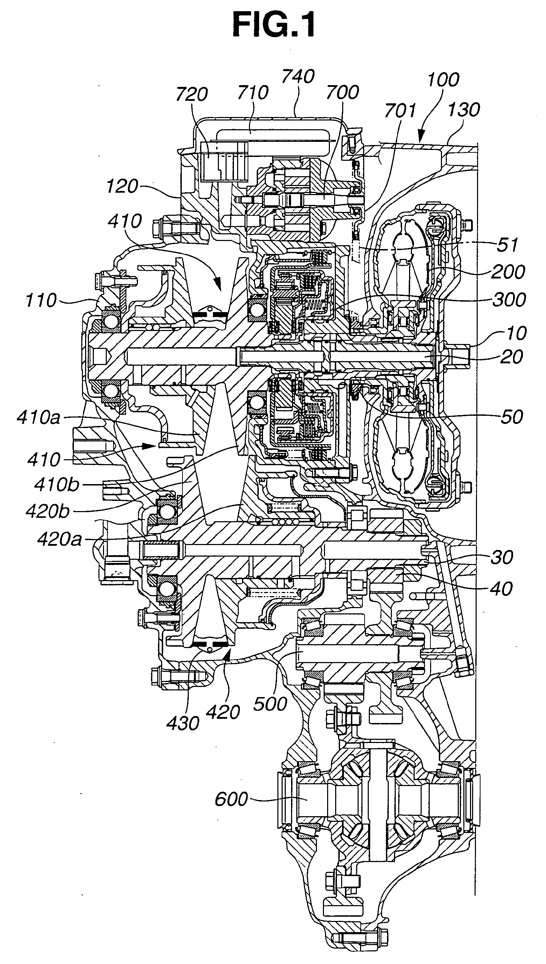

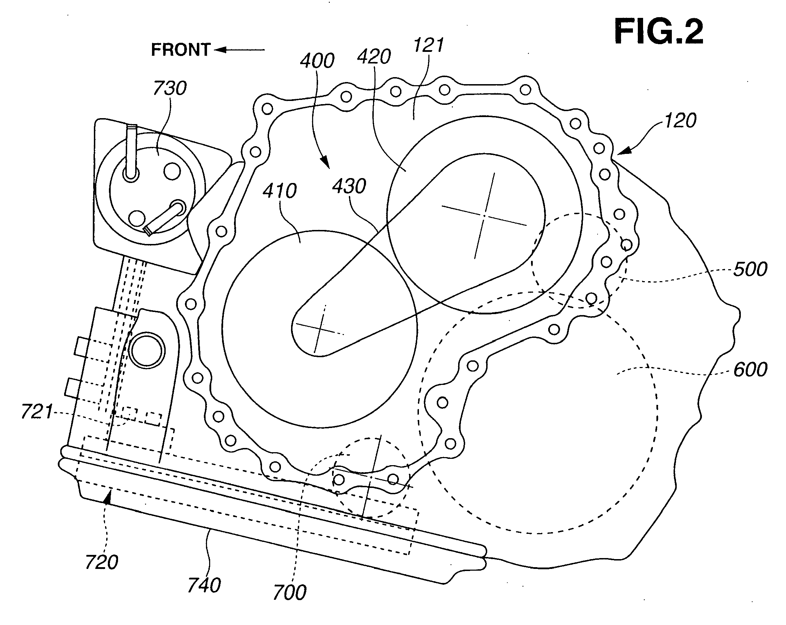

FIG. 1 shows automatic transmission to which the present invention is applied. Referring to FIG. 1, the automatic transmission comprises a transmission housing 100 comprising a side cover 110, a transmission casing 120, and a torque-converter casing 130. Arranged in the transmission housing 110 are a torque converter 200 for amplifying torque transferred from an engine, a forward/reverse switching mechanism 300 having a start clutch, a belt-type CVT mechanism 400 for ensuring stepless shift between the input and the output, an idler gear 500, and a differential gear 600. Referring also to FIG. 2, the automatic transmission also comprises, as a mechanism for supplying pressurized oil and lubricating oil to the devices, a vane pump 700, an oil strainer 710, a control valve unit 720, and an oil cooler 730.

The torque converter 200 comprises a pump impeller connected to an engine output shaft 10, a turbine runner connected to a transmission input shaft 20, a stator for straightening out inside flow of working oil, and a lockup clutch for directly transferring power during vehicle driving.

The forward/reverse switching mechanism 300 comprises a planetary-gear set comprising a sun gear coupled to the engine and including a forward clutch, a carrier coupled to a reverse brake, and a ring gear coupled to a primary pulley 410 and including a forward clutch. The type of the planetary-gear set is not limited to a specific type, and may be a single-pinion type or a double-pinion type.

The belt-type CVT mechanism 400 comprises a primary pulley 410 comprising a movable pulley 410a and a stationary pulley 410b and rotating together with rotation input from the forward/reverse switching mechanism 300, a secondary pulley 420 comprising a movable pulley 420a and a stationary pulley 420b and rotating together with driving wheels at a predetermined reduction ratio, and a belt 430 wound between the pulleys in the grooves thereof. An output gear 40 is secured to an end of a secondary-pulley shaft 30, and is meshed with the idler gear 500. The primary pulley 410 corresponds to an input-side transmission element of the present invention.

Two pinions of the differential gear 600 are secured to the idler gear 500, and side gears are meshed with the pinions from right and left, respectively. A drive shaft is coupled to each side gear to drive corresponding driving wheel.

The vane pump 700 comprises a rotor, a cam ring eccentrically attached to the rotor, and vanes for partitioning hydraulic chambers defined by the rotor and the cam ring. Each vane is fit in a slot of the rotor, at the inside of which working oil supplied to hydraulic passages provided in a rotor center shaft and the slots presses the vanes against the cam ring by a centrifugal force produced by rotation of the rotor. With this structure, the vane pump can be decreased in the number parts and increased in the life as compared with the structure that the vanes are pressed against the cam ring by a spring. A driven sprocket 701 is secured at an end of the rotor on the side of the torque converter 200, and is coupled through a chain 51 to a drive sprocket 50 which rotates together with the transmission input shaft.

The oil strainer 710 is arranged at the inlet of the vane pump 700, and a control valve unit 720 is arranged at the outlet thereof. Electronic parts 721 including a plurality of electromagnetic control valves and various sensors (such as oil-temperature sensor and fluid-pressure sensor) are arranged on the top face of the control valve unit 720.

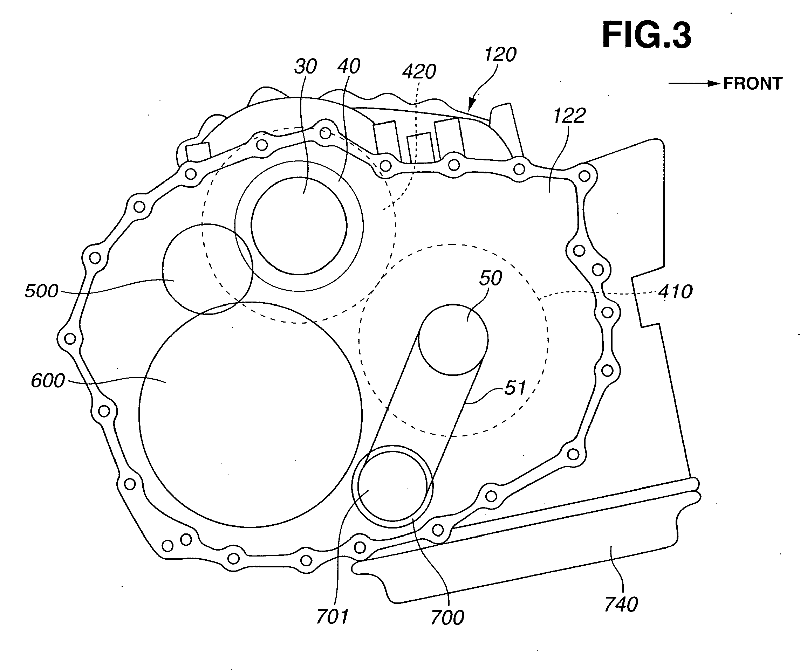

Referring next to FIGS. 2 and 3, a description will be made about layout of the belt-type CVT mechanism 400, idler gear 500, differential gear 600, and vane pump 700 in the transmission casing 120.

FIG. 2 shows transmission casing 120 seen from the side cover 110, and FIG. 3 shows transmission casing 120 seen from the torque-converter casing 130. Referring to FIGS. 2 and 3, the belt-type CVT mechanism 400, idler gear 500, differential gear 600, and vane pump 700 are schematically shown by circles. Note that dotted circles show devices disposed on the opposite side through the intervention of the wall.

The belt-type CVT mechanism 400 is accommodated in a first compartment 121 as shown in FIG. 2. The belt-type CVT mechanism 400 has a primary pulley 410 accommodated in the front lower portion of the first compartment 121, and a secondary pulley 420 accommodated in the rear upper portion of the first compartment 121. The lower portion of the first compartment 121 has an opening through which lubricating oil after lubricating the devices is discharged to an oil pan 740.

The idler gear 500, differential gear 600, and vane pump 700 are accommodate in the second compartment 122 as shown in FIG. 3.

The differential gear 600 is accommodated in the rear lower portion of the second compartment 122. The idler gear 500 is disposed to mesh with the output gear 40 secured to the secondary-pulley shaft 30 and the differential gear 600.

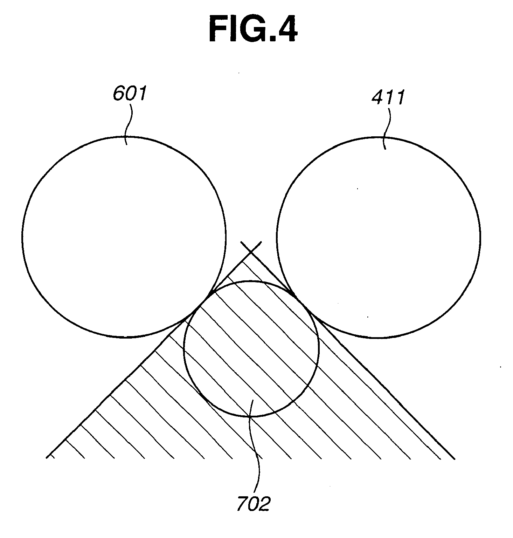

Referring next to FIG. 4, arrangement of the vane pump 700 will be described in detail.

The vane pump 700 is arranged below between the primary pulley 410 and the differential gear 600. FIG. 4 shows range of arrangement of the vane pump 700. Referring to FIG. 4, the circles are obtained on the supposition that when projecting the primary pulley 410, differential gear 600, or vane pump 700 on the plane longitudinally parallel to the transmission casing 120, a minimum circle which can receive therein a corresponding device with its axis of rotation as center is an occupation circle of the device.

The vane pump 700 is disposed in a diagonally shaded area which is closer to the oil pan 740 than a first occupation circle 411 of the primary pulley 410 and a third occupation circle 601 of the differential gear 600, and below a common tangent line of the first occupation circle 411 and a second occupation circle 702 of the vane pump 700 and a common tangent line of the third occupation circle 601 and the second occupation circle 702.

In addition to the above conditions, the vane pump 700 is disposed in a position where the second occupation circle 702 makes contact with both the first occupation circle 411 and the third occupation circle 601.

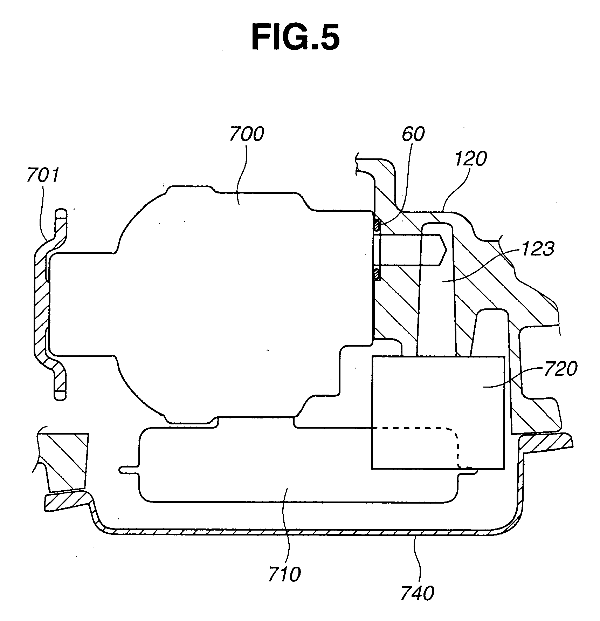

FIG. 5 shows vane pump 700 and its surroundings. Referring to FIG. 5, the vane pump 700 and the oil strainer 710 are integrally formed with each other, and the oil strainer 710 is arranged adjacent to the oil pan 740. Moreover, the vane pump 700 and the oil strainer 710 are arranged to be immersed in working oil stored in the oil pan 740.

The control valve unit 720 is arranged adjacent to the oil pan 740, and is connected to a hydraulic passage 123 provided in the transmission casing 120 through an outlet of the vane pump 700 and a seal member 60.

Next, operation will be described.

Regarding operation of the hydraulic circuit, when the engine is driven, torque is transmitted to the driven sprocket 701 through the drive sprocket 50 provided to the transmission input shaft 20 and the chain 51, thus driving the vane pump 700.

When the vane pump 700 is driven, oil stored in the oil pan 740 is supplied to the vane pump 700 after removing therefrom foreign substances by the oil strainer 710.

The vane pump 700 produces hydraulic pressure in supplied oil to supply it to the control valve unit 720.

The control valve unit 720 adjusts hydraulic pressure of oil to supply it to the devices.

The oil cooler 730 recovers oil which was not supplied from the control valve unit 720 to the devices as working oil and oil stored in the oil pan 740, which are supplied to the devices as lubricating oil after removing therefrom foreign substances by a filter arranged at a inlet of the oil cooler 730 and being cooled by a coolant passage provided to the hydraulic passage in the oil cooler 730.

Regarding operation of the drive system, the torque converter 200 transmits torque transmitted from the engine to the forward/reverse switching mechanism 300 by increasing the torque during low-speed rotation and by engaging the lockup clutch during high-speed rotation.

In the forward/reverse switching mechanism 300, during forward driving, the forward clutch makes the sun gear and the ring gear engaged together to output input rotation as it is. On the other hand, during backward driving, the reverse brake fixes the carrier to the transmission casing 120 to decelerate input rotation into reverse rotation for outputting.

The belt-type CVT mechanism 400 comprises cylinder chambers arranged on the back of the movable pulleys of the primary and secondary pulleys 41, 420 to hydraulically change the groove width. By controlling rotation-axis direction thrust for pressing the belt 430, the effective winding diameter of the belt 430 is changed to achieve stepless shift.

Torque changed by the belt-type CVT mechanism 400 is transmitted to the driving wheels through the output gear 40, idler gear 500, and differential gear 600.

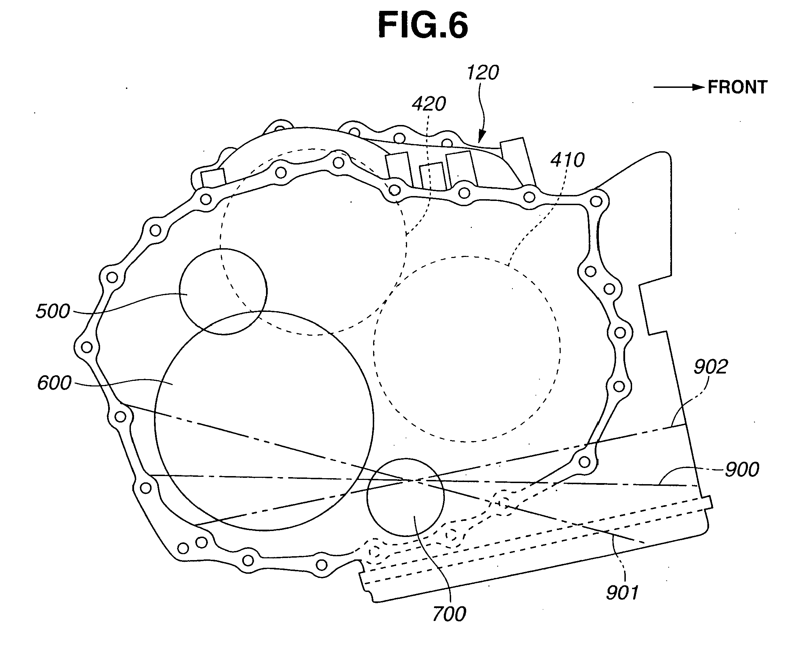

Referring to FIG. 6, the oil level within the transmission casing 120 at inclination will be described. FIG. 6 shows oil level within the transmission casing 120 when the vehicle is on the uphill road or the downhill road, wherein reference 900 shows oil level when the vehicle is in the horizontal state, reference 901 shows oil level when the vehicle has a front part inclined upwardly, and reference 902 shows oil level when the vehicle has a rear part inclined upwardly.

When the front part of the vehicle inclines upwardly, the oil level lowers relatively in the front portion of the inside of the transmission casing 120, and rises relatively in the rear portion (see the oil level 901). On the other hand, when the rear part of the vehicle inclines upwardly, the oil level rises relatively in the front portion of the inside of the transmission casing 120, and lowers relatively in the rear portion (see the oil level 902).

In the embodiment, since the position where the vane pump 700 is disposed is substantially in the center of the longitudinal direction of the transmission casing 120 and above and in the vicinity of the oil strainer 710, the vane pump 700 is immersed in oil even when the vehicle inclines in the longitudinal direction.

The embodiment produces the following effects:

(1) The vane pump 700 is disposed closer to the oil pan 740 than the first occupation circle 411 of the primary pulley 410 and the third occupation circle 601 of the differential gear 600, and below common tangent line of the first occupation circle 411 and the second occupation circle 702 of the vane pump 700 and common tangent line of the third occupation circle 601 and the second occupation circle 702. Thus, even when the vehicle inclines in the longitudinal direction, variation is smaller in oil-level height in the surroundings of the vane pump 700. Therefore, even at inclination of the vehicle, possibility can be reduced that the vane pump 700 is not immersed in oil. As a result, even when the vehicle inclines at engine stop, oil remains in the rotor of the vane pump 700, and thus can press the vanes at the initial stage of operation of the vane pump 700, obtaining stable initial discharge-pressure characteristic at engine start. This allows quick initial operation of the devices, securing quick start-ability of the vehicle.

(2) Since the vane pump 700 is disposed in a position where the second occupation circle 702 of the vane pump 700 makes contact with both the first occupation circle 411 of the primary pulley 410 and the third occupation circle 601 of the differential gear 600, the structure of the automatic transmission can be reduced in size.

(3) Since the oil strainer 710 is integrally formed with the vane pump 700, the oil strainer can be reduced in the vertical direction. This allows a reduction in vertical size and weight of the automatic transmission.

(4) Since the oil strainer 710 is integrally formed with the vane pump 700, there is no need to arrange a hydraulic passage between the oil strainer 710 and the vane pump 700, allowing efficient recovery of oil. This allows achievement of high efficiency of the vane pump 700, resulting in enhancement in fuel consumption.

(5) Since the control valve unit 720 is arranged adjacent to the oil pan 740, the hydraulic passage connecting the vane pump 700 and the control valve unit 720 can be shortened, leading to a reduction in pressure loss in the hydraulic passage. This allows achievement of high efficiency of the vane pump 700, resulting in enhancement in fuel consumption.

Having described the present invention in connection with the illustrative embodiment, it is noted that the present invention is not limited thereto, and various changes and modifications can be made without departing from the scope of the present invention.

The entire teachings of Japanese Patent Application 2004-283664 filed September 29, 2004 are hereby incorporated by reference.

## Claims

1. A belt-type continuously variable transmission (CVT), comprising:
an input-side transmission element, the input-side transmission element having a first occupation circle;
an oil pump, the oil pump having a second occupation circle;
a differential gear, the differential gear having a third occupation circle;
an oil pan; and
a housing which accommodate the input-side transmission element, the oil pump, the differential gear, and the oil pan, the input-side transmission element, oil pump, and differential gear having axes located in different positions,
the oil pump being disposed closer to the oil pan than the first occupation circle and the third occupation circle and below a common tangent line of the first occupation circle and the second occupation circle and a common tangent line of the third occupation circle and the second occupation circle, the oil pump being immersed in working oil within the oil pan.

2. The belt-type CVT as claimed in claim 1, wherein the oil pump includes a vane pump.

3. The belt-type CVT as claimed in claim 1, wherein the second occupation circle makes contact with both the first occupation circle and the third occupation circle.

4. The belt-type CVT as claimed in claim 1, further comprising an oil strainer integrally formed with the oil pump.

5. The belt-type CVT as claimed in claim 1, further comprising a control valve unit arranged adjacent to the oil pan, the control valve unit outputting a control pressure of the CVT.

6. A belt-type continuously variable transmission (CVT), comprising:
an input-side transmission element, the input-side transmission element having a first occupation circle;
an oil pump, the oil pump having a second occupation circle;
a differential gear, the differential gear having a third occupation circle;
an oil pan; and
means for accommodating the input-side transmission element, the oil pump, the differential gear, and the oil pan, wherein the input-side transmission element, oil pump, and differential gear have axes located in different positions,
the oil pump being disposed closer to the oil pan than the first occupation circle and the third occupation circle and below a common tangent line of the first occupation circle and the second occupation circle and a common tangent line of the third occupation circle and the second occupation circle, the oil pump being immersed in working oil within the oil pan.
